# EUROPEAN PATENT APPLICATION

(11) **EP 1 150 501 A1**
(43) Date of publication of application: **31.10.2001**
(21) Application number: 99959750.3
(22) Date of filing: 10.12.1999
(51) Int. Cl.: H04N 5/64

(54) **TELEVISION TUNER UNIT**

(30) Priority: 11.12.1998 JP 35335998
(71) Applicant: Olympus Optical Co., Ltd., Tokyo 151-0072 (JP)
(72) Inventor: Ogasawara, Yuji, Hachioji-shi, Tokyo 192-0911 (JP)
(74) Representative: Käck, Jürgen
(86) International application number: JP9906941
(87) International publication number: WO0036831

(57) **Abstract**

A television tuner unit (1) for extracting a signal of a desired channel and allowing the user to enjoy television video readily by means of a head-mounted video display (3), comprising a rod antenna (13) extensible and capable of taking on an accommodated position and a receiving position, a tuner section (12), operation buttons provided at a position where the buttons are substantially covered with the rod antenna (13) when it takes on the accommodated position, a battery mounting section (15) where a battery (4) is mounted, a connection section (16) for feeding power to the control unit (2) when a battery is mounted in the battery mounting section (17), and an AV connection cable (24) and connection terminal (25) for transmitting a television signal selected by the tuner section (12) to the control unit (2). The television tuner unit (1) is fitted to the control unit (2) of the head-mounted video display (3).

## Description

### Technical Field

The present invention relates to a television tuner unit, and more particularly, to a television tuner unit which can be fitted to and for use with a control unit of a head mounted video display.

### Background Art

In an electronic device comprising a video display, a variety of techniques have conventionally been proposed for combining a television tuner unit with the video display to allow a television image to be displayed thereon.

As an example of such techniques, Japanese Patent Application Laid-Open No. Hei 9-247632 describes a technique for connecting a television tuner unit to a personal computer through a PC card or the like.

Also, Japanese Patent Application Laid-Open No. Hei 6-149413 describes a technique for connecting a television tuner unit to a connector section of a note type personal computer for enjoying television images and video images.

Further, Japanese Patent Application Laid-Open No. Hei 7-38791 describes a television tuner unit which can be mounted in place of a camera unit after it is removed from a video integrated camera comprising a display, such that a television image can be viewed on the display.

Furthermore, Japanese Patent Application Laid-Open No. Hei 6-334554 describes a technique which shows an internal configuration of a television tuner unit as mentioned above.

In recent years, a variety of head mounted video displays have been proposed and commercialized for readily enjoying an image on a large screen. The present applicant has also commercialized a head mounted video display which employs a free curve prism to reduce the weight and improve the image quality. This head mounted video display is connected to a control unit through a connection code, and receives a video signal, an audio signal and a power supply from the control unit, such that a video image is projected to eyeballs of a user and sound is generated toward ears of the user. In this event, the brightness of the video image, the volume of the sound, and power ON/OFF can be adjusted by operating the control unit.

For enjoying a television image with such a head mounted video display, the control unit is connected to a video source such as a television, a video recorder, or the like through a connection code to do so.

However, the conventional head mounted video display as described above does not constitute a system which permits the user to enjoy a television image when he carries it outdoors. Since the connection code from a video source is always coupled to the head mounted video display when a television image is being displayed, a range of activities is limited when it is used.

Thus, the techniques described in the respective applications cited above may be applied to mount a television tuner unit to the head mounted video display itself, in which case, however, the head mounted video display results in an increased weight and a larger shape. Since the head mounted display is mounted on the head of the user when in use, and its weight should be minimized so as not to compromise the use feeling, such means, if employed, would damage its light use feeling.

Thus, there is a need for commercialization of an apparatus which allows the user to readily enjoy a television image while making good use of the advantages of the head mounted video display which can be lightly used.

The present invention has been made in view of the situation mentioned above, and its object is to provide a television tuner unit which allows the user to readily enjoy television images with a head mounted video display.

### Disclosure of the Invention

To achieve the above object, a television tuner unit according to a first invention is a television tuner unit, fitted to and for use with a control unit for controlling a head mounted video display and having a battery mounting section for mounting a battery therein, which comprises an antenna for receiving television radio waves and converting the television radio waves to an electric signal, a tuner section for extracting a signal of a desired channel from the electric signal converted by the antenna, a connection section mounted in the battery mounting section of the control unit for supplying power to the control unit, and a television signal output section for sending a television signal selected by the tuner section to the control unit.

Also, a television tuner unit according to a second invention is the television tuner unit according to the first invention, wherein a battery mounting section for mounting a battery therein is further included.

Further, a television tuner unit according to a third invention is the television tuner unit according to the first invention, wherein the antenna can take on an accommodated position along a surface of a housing of the television tuner unit and a receiving position rising from the housing, and the television tuner unit comprises operating means for performing operations associated therewith, on a surface of the housing substantially covered with the antenna when the antenna takes on the accommodated position.

A television tuner unit according to a fourth invention is the television tuner unit according to the first invention, wherein the housing of the television tuner unit is formed in a substantially L-shape having a top surface and a side surface to cover two surfaces including a top surface on which the battery mounting section is disposed and one side surface of the control unit shaped in a rectangular solid, and is formed in such a shape that does not prevent operations on an operating section disposed on the control unit.

A television tuner unit according to a fifth invention is the television tuner unit according to the fourth invention, wherein a bottom surface of the side surface is formed to lie substantially in the same plane as a bottom surface of the housing of the control unit when the television tuner is fitted to the control unit.

A television tuner unit according to a sixth invention is the television tuner unit according to the first invention, wherein the television signal output section comprises a connection code connected to the control unit, such that the connection code straddles over a removal operating section for removing a battery or the television tuner unit mounted in the battery mounting section of the control unit.

A television tuner system according to a seventh invention comprises a control unit for controlling a head mounted video display, and including a battery mounting section for mounting a battery therein, and a television tuner unit including an antenna for receiving television radio waves and converting the television radio waves to an electric signal, a tuner section for extracting a signal of a desired channel from the electric signal converted by the antenna, a connection section mounted in the battery mounting section of the control unit for supplying power to the control unit, and a television signal output section for sending a television signal selected by the tuner section to the control unit.

A television tuner system according to an eighth invention is the television tuner system according to the seventh invention, wherein the television tuner unit further comprises a battery mounting section for mounting a battery therein.

A television tuner system according to a ninth invention is the television tuner system according to the seventh invention, wherein the antenna can take on an accommodated position along a surface of a housing of the television tuner and a receiving position rising from the housing, and the television tuner unit comprises operating means for performing operations associated therewith, on a surface of the housing substantially covered with the antenna when the antenna takes on the accommodated position.

A television tuner system according to a tenth invention is the television tuner system according to the seventh invention wherein the control unit comprises an operating section on a surface of a housing formed substantially in a rectangular solid for controlling the head mounted video display, the housing of the television tuner unit is formed in a substantially L-shape having a top surface and a side surface to cover two surfaces including a top surface on which the battery mounting section is disposed and one side surface of the control unit, and is formed in such a shape that does not prevent operations on an operating section disposed on the control unit.

A television tuner system according to an eleventh invention is the television tuner system according to the tenth invention, wherein a bottom surface of the side surface of the television tuner unit is formed to lie substantially in the same plane as a bottom surface of the housing of the control unit when the television tuner unit is fitted to the control unit.

A television tuner system according to a twelfth invention is the television tuner system according to the seventh invention, wherein the control unit further comprises a removal operating section for removing a battery or the television tuner unit mounted in the battery mounting section of the control unit, and the television signal output section of the television tuner unit comprises a connection code disposed at a position at which the connection code is connected to the control unit, straddling over the removal operating section.

A head mounted video display system according to a thirteenth invention comprises a head mounted video display mounted on a head for use in observing at least a video image displayed thereon, a control unit for controlling the head mounted video display, and including a battery mounting section for mounting a battery therein, and a television tuner unit including an antenna for receiving television radio waves and converting the television radio waves to an electric signal, a tuner section for extracting a signal of a desired channel from the electric signal converted by the antenna, a battery mounting section for mounting a battery therein, a connection section mounted in the battery mounting section of the control unit for supplying power to the control unit, and a television signal output section for sending a television signal selected by the tuner section to the control unit.

### Brief Description of the Drawings

Fig. 1 is a block diagram illustrating the configuration of a head mounted video display system according to one embodiment of the present invention;
Fig. 2 is a perspective view illustrating an outer appearance of the head mounted video display system of the embodiment;
Fig. 3 is a perspective view illustrating a television tuner unit in the embodiment from the front side;
Fig. 4 is a perspective view illustrating the television tuner unit in the embodiment from the back side;
Fig. 5 is a perspective view illustrating how the television tuner unit is attached to a control unit in the embodiment;
Fig. 6 is a perspective view illustrating how a battery is attached to the television tuner unit fitted in the control unit in the embodiment;
Fig. 7 is a perspective view illustrating how an AC adaptor is connected to the television tuner unit fitted in the control unit in the embodiment;
Fig. 8 is a perspective view showing how an adjustment is made when a rod antenna of the television tuner unit is used in the embodiment; and
Fig. 9 is a diagram illustrating a state of the television tuner unit displayed on the screen of the head mounted video display in the embodiment.

### Best Mode for Carrying out the Invention

One embodiment of the present invention will hereinafter be described with reference to the drawings.

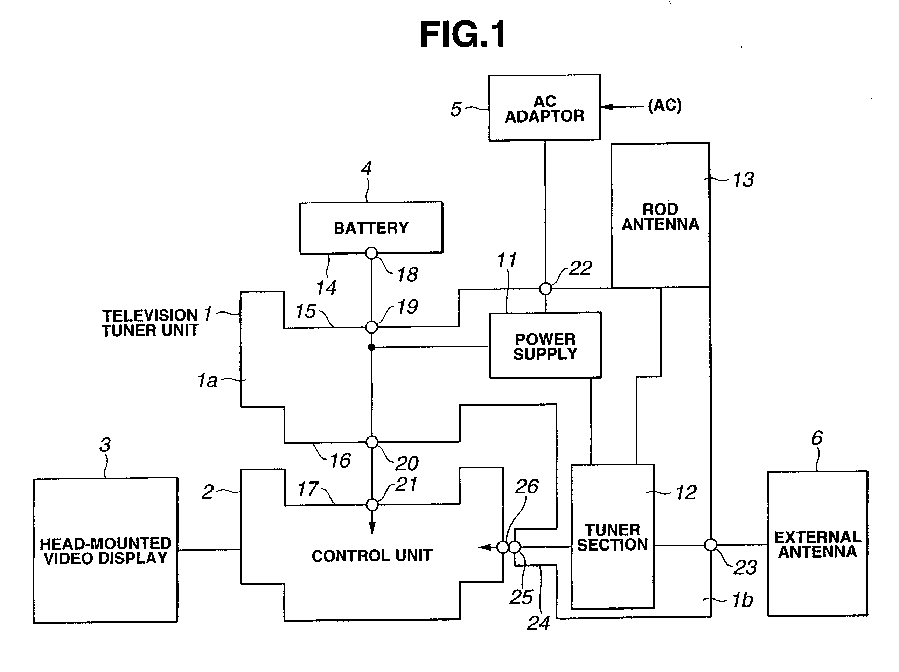

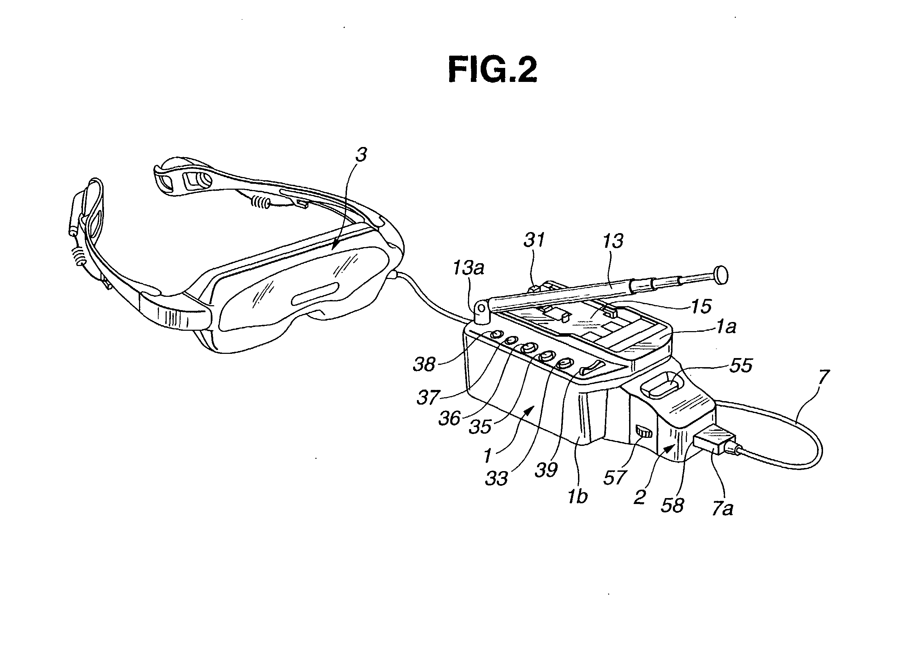

Figs. 1 through 9 illustrate one embodiment of the present invention, where Fig. 1 is a block diagram illustrating the configuration of a head mounted video display system, and Fig. 2 is a perspective view illustrating an outer appearance of the head mounted video display system.

This head mounted video display system comprises a head mounted video display 3 mounted on the head of the user for observing a video image and hearing sound; a control unit 2 provided separately from this head mounted video display 3 and connected thereto through a connection code for adjusting the brightness of an image and the volume of sound of the head mounted video display 3; a television tuner unit 1 removably attached to this control unit 2 for receiving television radio waves for selecting a channel; and a battery 4 serving as a power source built in this television tuner 1. The television tuner unit 1 can also be driven with an external power supply through an AC adaptor 5, and can also select a channel with a signal from an external antenna 6.

More specifically, the television tuner unit 1 is configured to be fitted to the control unit 2 through a battery mounting section 17 provided therein, and includes a connection section 16 for connection to the battery mounting section 17.

The television tuner unit 1 also comprises a battery mounting section 15 configured substantially in a similar manner to the battery mounting section 17 of the control unit 2. The battery 4 is built in this battery mounting section 15 to provide a power from the battery 4.

Specifically, the connection section 14 of the battery 4 is mounted in the battery mounting section 15 to electrically connect a contact 18 of the battery 4 to a contact 19 of the battery mounting section 15, thereby supplying the power to a power supply 11 of the television tuner unit 1.

While a wide variety of batteries including a primary battery and secondary battery can be applied to the battery 4, a rechargeable lithium ion battery may be selected as a specific example.

Also, the power from the AC adapter 5 is supplied to this power supply 11 through the AC adaptor connection terminal 22. When the battery 4 and the AC adapter 5 are both connected, the power from the AC adapter 5 is preferentially used. In this way, respective circuits including a tuner section 12 in the television tuner unit 1 is supplied with the power from the power supply 11.

The power from the battery 4, on the other hand, is also supplied to the control unit 2 through a contact 20 of the connection section 16 and a contact 21 of the battery mounting section 17, so that the control unit 2 is supplied with the power through the television tuner unit 1 when the television tuner unit 1 is mounted. Also, when the AC adaptor 5 is connected, the power is supplied to the control unit 2 as well through the power supply 11.

The television tuner unit 1 comprises a rod antenna 13 which is a telescopic antenna, such that television radio waves are received and converted to an electric signal through this rod antenna 13.

The electric signal output from the rod antenna 13 is input to the tuner section 12. This tuner section 12 is fed with the electric signal from the external antenna 6 when the external antenna 6 is connected through an external antenna terminal 23. Then, the tuner unit 12 receives the power supplied from the power supply 11 and driven as described above.

A television signal selected by the tuner section 12 is output to the control unit 2 through an AV connection cable 24 which is a connection code as a television signal output section. More specifically, a connection terminal 25, forming part of the connection code disposed in a leading end portion of the AV connection cable 24, is connected to an AV input terminal 26 of the control unit 2 for outputting.

While the television signal output section is herein formed of the connection code comprised of the AV connection cable 24 and the connection terminal 25, a terminal or the like for outputting a television signal may be provided on a circuit board or the like, and the terminal is exposed from the connection section 16 to form the television signal output section, in which case a terminal for receiving a television signal is previously provided in the battery mounting section 17 of the control unit 2. When such a configuration is employed, the power supply and output of a television signal can be advantageously provided without requiring an effort of separately connecting a connection code only by connecting the connection section 16 of the television tuner unit 1 to the battery mounting section 17 of the control unit 2.

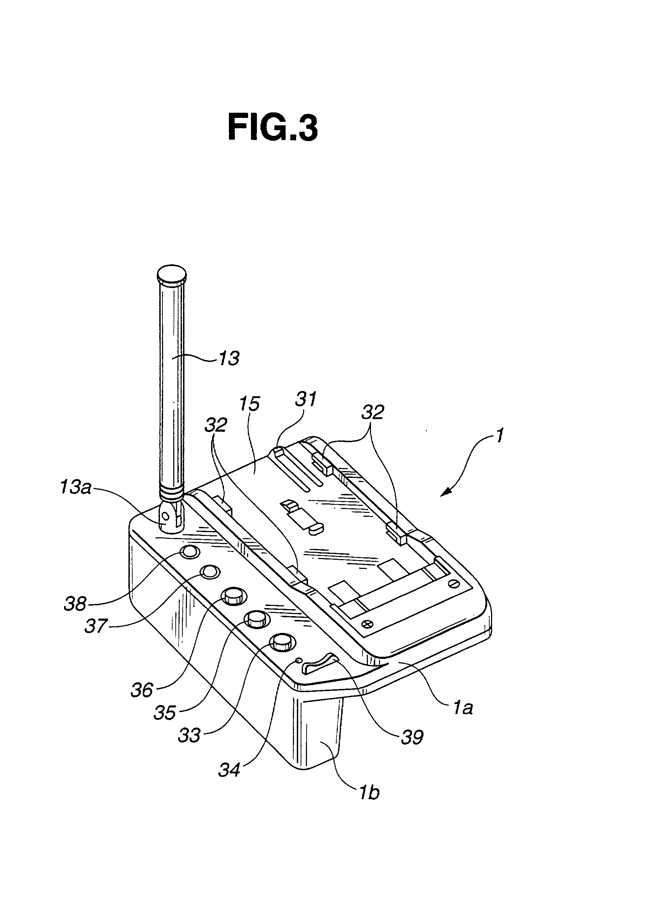

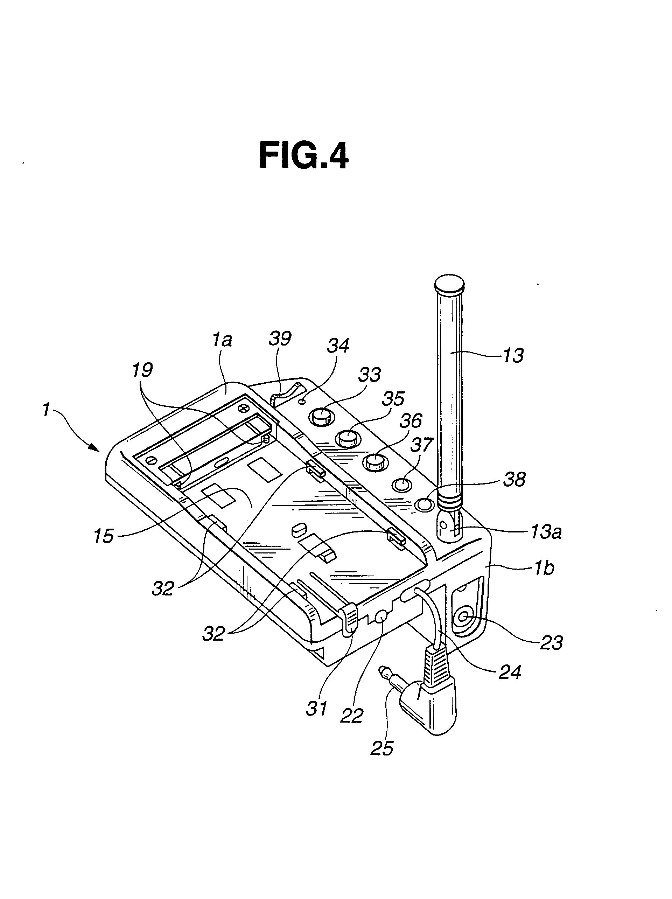

The configuration of the television tuner unit 1 will be described in greater detail with reference to Figs. 3 and 4. Fig. 3 is a perspective view illustrating the television tuner unit from the front side, and Fig. 4 is a perspective view illustrating the television tuner unit from the back side.

This television tuner 1 comprises a substantially L-shaped housing having a top surface 1a and a side surface 1b so as to be as compact as possible for convenient carriage and so on when it is attached to the control unit 2 which is shaped in a substantially rectangular solid. Then, the television tuner unit 1 is configured such that the bottom surface of the side surface 1b is substantially in the same plane as the bottom surface of the control unit 2, when it is fitted to the control unit 2, to increase the stability when it is placed on a desk or the like, and to hold the stability even when the rod antenna 13 is extended and rotated, as will be described later.

The battery mounting section 15 is provided on the top surface 1a, and the battery mounting section 15 is formed with slide engagement hooks 32 at two positions on both left and right sides for sliding the battery 4 into engagement therewith. The battery mounting section 15 is also provided with a battery removing knob 31 which is operated for removing the fitted battery 4.

Further, the pair of contacts 19 comprised of a plus contact and a minus contact are disposed on both side regions of the back surface in the longitudinal direction of the battery mounting section 15.

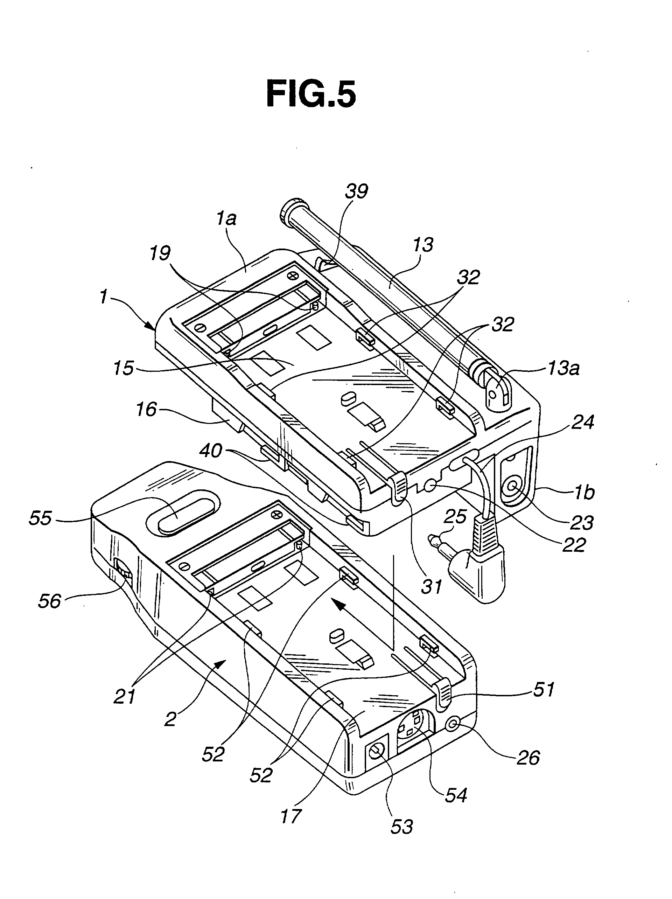

The connection section 16 (see Fig. 5 or the like) is disposed on the surface below the battery mounting section 15 on the top surface 1a, and guide grooves 40 (see Fig. 5) are formed at two positions on both left and right sides of the connection section 16 for sliding the television tuner unit 1 into attachment to the control unit 2.

Also, in a side portion of the top surface 1a corresponding to an upper portion of the side surface 1b, the aforementioned telescopic rod antenna 13 is attached foldably about a hinge 13a disposed at a proximal end thereof. The hinge 13a is also pivotable to the housing. This allows the rod antenna 13 to take on an accommodated position along the housing and a receiving position rising from the housing, as well as to be adjusted for the angle and direction when it is in the receiving position.

As the rod antenna 13 takes on the accommodated position, a variety of operating buttons and so on, serving as operating means for operating this television tuner unit, are arranged on the surface of the housing which is substantially covered with the rod antenna 13.

Specifically, there are arranged a power supply switch 33 for commanding to supply the power from the power supply 11 to the tuner section 12; a power supply lump 34 comprised of an LED or the like for emitting green light when the power is turned on by this power supply switch 33 for indicating it; a channel up button 35 for changing a channel to be selected upward; a channel down button 36 for changing a channel to be selected downward; a sound button 37 for switching sound between stereo and monaural and for switching between main sound and sub-sound during a bilingual program; and a display button 38 for displaying a sound condition and a selected channel, associated with this television tuner unit 1, on the screen within the head mounted video display unit 3.

Further, an antenna receptor 39 is formed near the power supply lump 34 for receiving the rod antenna 13 when it takes on the accommodated position, and carries the rod antenna 13 such that, the rod antenna 13, when it takes on the accommodated position, substantially covers the power supply switch 33, the channel up button 35, the channel down button 36, the sound button 37, and the display button 38, with an appropriate spacing maintained therebetween so that these buttons cannot be directly touched.

Also, an AC adaptor connection terminal 22 is disposed on an end face of the television tuner unit 1 in the longitudinal direction near the buttery removal knob 31, and the AV connection cable 24 extends from the side of the AC adaptor connection terminal 22. The connection terminal 25 is disposed at the distal end of the AV connection cable 24, as mentioned above. Then, an external antenna terminal 23 is disposed at a position on the end face of the side surface 1b for connecting a code from the external antenna 6.

Next, the control unit 2, to which the foregoing television tuner unit 1 is attached, will be described with reference to Fig. 5. Fig. 5 is a perspective view illustrating how the television tuner 1 is attached to the control unit 2.

The control unit 2 is provided with the battery mounting section 17 on its top surface, and the battery mounting section 17 is formed with slide engagement hooks 52 at two positions on both left and right sides for sliding the battery 4 or the television tuner unit 1 into engagement therewith. The battery mounting section 17 is also provided with a battery removal knob 51 serving as a remover which is operated for removing the fitted battery 4 or television tuner unit 1.

It should be noted that since the battery removal knob 51 is positioned slightly to the right of the battery mounting section 17 as illustrated, the battery removal knob 31 in the television tuner unit 1 is positioned slightly to the left of the battery mounting section 15, so as to prevent interference with an operation on the battery removal knob 51.

Further, the pair of contacts 21 comprised of a plus contact and a minus contact are disposed on both side regions of the back surface in the longitudinal direction of the battery mounting section 17.

On the other hand, the AV input terminal 26 is disposed on a longitudinal end face of the control unit 2 in a neighborhood slightly below the battery removal knob 51, an S video input terminal 54 is disposed slightly to the left thereof, and an AC input terminal 53 is disposed further on the left side.

In this way, the control unit 2 can be fed with a video image and sound from a video deck, an LD player, a DVD player or the like, and supply the same to the head mounted video display 3. When the television tuner unit 1 is not mounted, the AC adaptor 5 can be directly connected to the AC input terminal 53.

Further, a power supply switch 55, which serves as an actuator for powering ON/OFF the head mounted video display 3, is disposed in a leading end portion on the top surface side of this control unit 2, a brightness adjusting dial 56 serving as a similar actuator is disposed on one side thereof, and a sound volume adjusting dial 57 (see Fig. 2) serving also as an actuator, is disposed on the other side thereof.

The head mounted video display 3 is connected to the control unit 2 by connecting a connector 7a disposed at the distal end of the connection code 7 extending from the head mounted video display 3 to a connector receptacle 58 disposed in the leading end face of the control unit 2, as illustrated in Fig. 2.

When the foregoing television tuner unit 1 is fitted to the control unit 2, the connection section 16 is aligned to the battery mounting section 17, and the guide groove 40 is slid into the battery mounting section 17, as it is fitted into the slide engagement hooks 52, and pressed into a position at which the connection section 16 is stopped by the battery removal knob 51 to prohibit the removal thereof.

When the television tuner unit 1 is stopped by the battery removal knob 51 in this way, an electrical connection has been made between the contact 20 and the contact 21 on both sides.

Since a mechanical connection as well as a connection to the power supply have been established in this state, the AV connection cable 24 is connected to the AV input terminal 26 of the control unit 2 to make a connection associated with a video signal and a sound signal, thus completing the operation for connecting the television tuner unit 1 to the control unit 2.

These television tuner unit 1 and the control unit 2 comprise a television tuner system which forms part of the head mounted video display system.

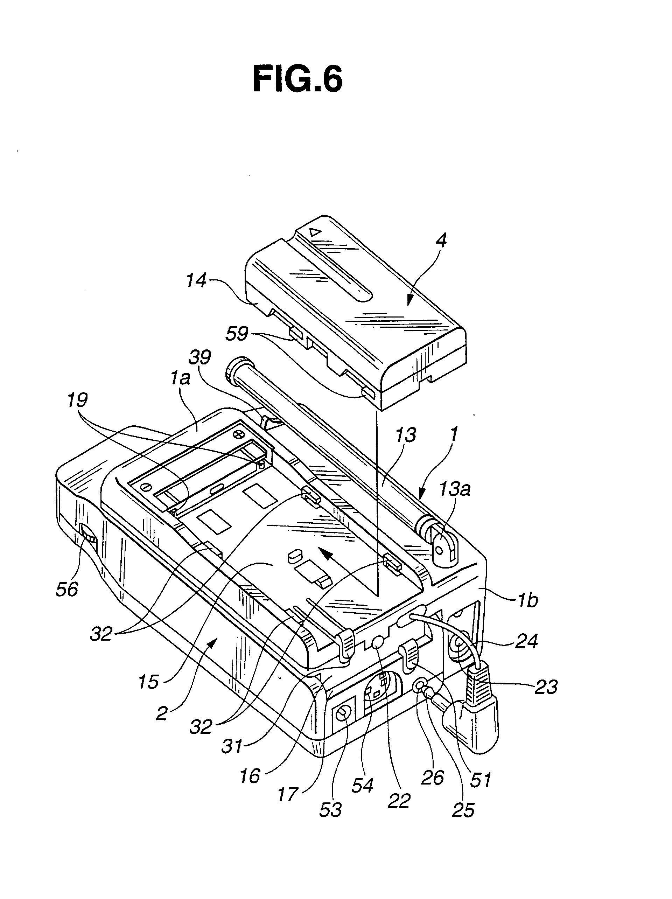

Fig. 6 is a perspective view illustrating how the battery 4 is attached to the television tuner unit 1 fitted in the control unit 2.

Also, the battery 4 is mounted in the television tuner unit 1 substantially in a similar procedure.

Specifically, the connection section 14 of the battery 4 is aligned to the battery mounting section 15, and slid thereinto, as the slide engagement hooks 32 are fitted into the guide grooves 59 formed at two positions on both left and right sides of the connection section 14, and pressed into a position at which the connection section 14 is stopped by the battery removal knob 31 to prohibit the removal thereof.

When the television tuner unit 1 is stopped by the battery removal knob 31 in this way, an electrical connection has been made between the contact 18 and the contact 19 on both sides.

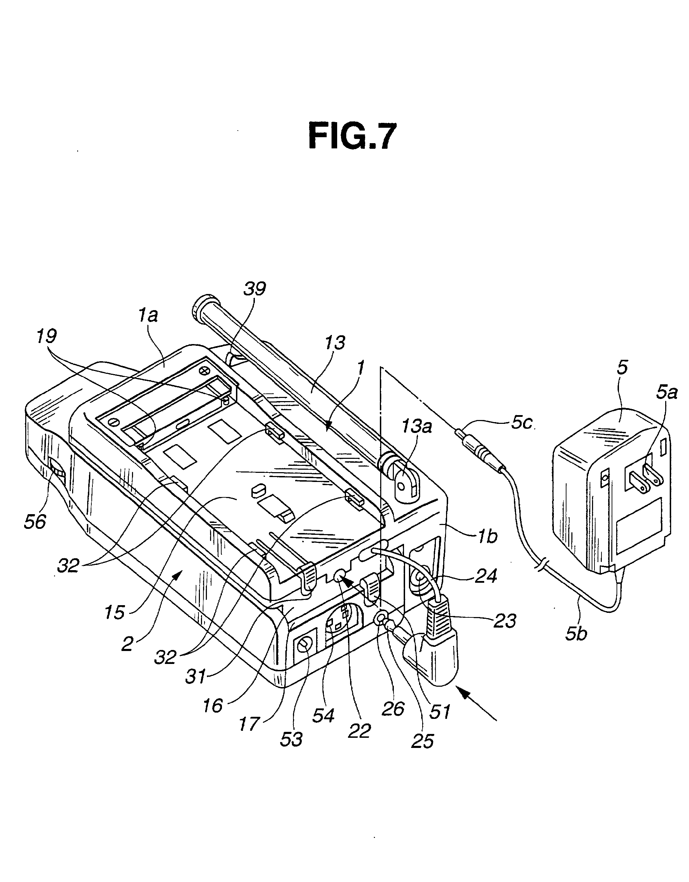

Next, Fig. 7 is a perspective view illustrating how the AC adaptor 5 is connected to the television tuner unit 1 fitted in the control unit 2.

The AC adaptor 5 is configured to be connected to the AC adaptor connection terminal 22 of the television tuner unit 1. For the connection, a connection terminal 5c disposed at the distal end of a code 5b of the AC adaptor 5 is inserted into the AC adaptor connection terminal 22 for making an electrical connection. Then, a plug 5a of the AC adaptor 5 is plugged into a wall outlet, whereby the power is supplied.

It should be noted that when the television tuner unit 1 is not fitted in the control unit 2, the AC adaptor 5 is directly connected to the AC input terminal 53 of the control unit 2, as described above.

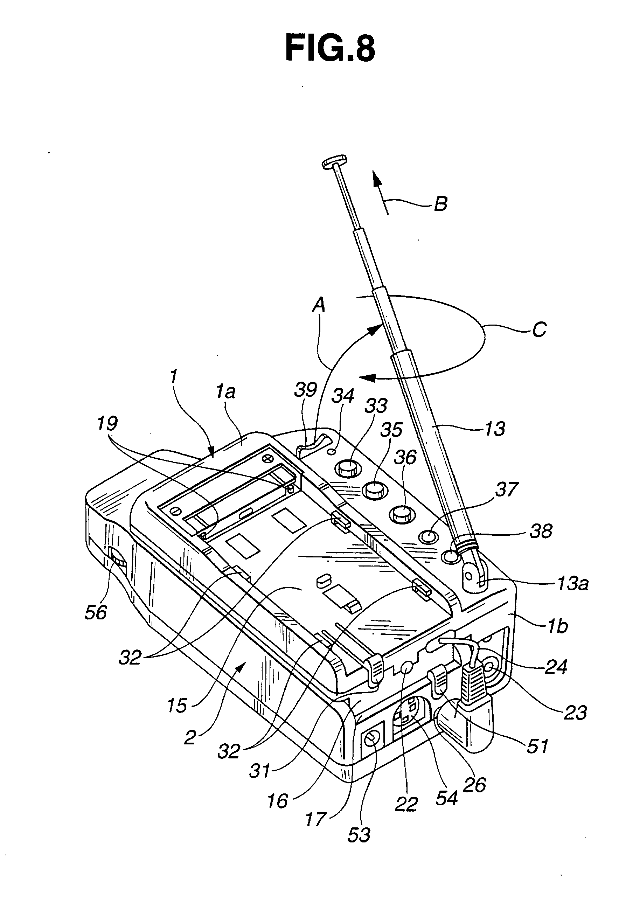

Next, Fig. 8 is a perspective view illustrating how an adjustment is made when the rod antenna 13 of the television tuner unit 1 is used.

When the rod antenna 13 is used, the rod antenna 13 is pulled up from the antenna receptor 39 as indicated by an arrow A, and then the telescopic rod antenna 13 is fully extended in a direction indicated by an arrow B.

Then, the power supply switch 33 on the television tuner unit 1 is operated to power on. Upon powering on, Channel 1 is automatically selected as a channel.

It should be noted that when the rod antenna 13 is carried on the antenna receptor 39, the power supply switch 33 is prevented from operations thereon by the rod antenna 13 which substantially covers the power supply switch 13, as described above, so that the power supply switch 33 will never be erroneously operated when the television tuner unit 1 is not in use.

Subsequently, the power supply switch 55 on the control unit 2 is operated to power on the head mounted video display 3 to allow the user to observe a video image, and the channel up button 35 and the channel down button 36 are operated to select a desired channel.

It should be noted that the tuner section 12 has an automatic selection function which automatically finds a receivable channel and stops at this channel by continuously pressing these channel up button 35 and channel down button 36, for example, for one second or longer.

Subsequently, the rod antenna 13 is moved as indicated by an arrow C to adjust its angle and direction to perform a tuning operation such that a video image is most clearly observed.

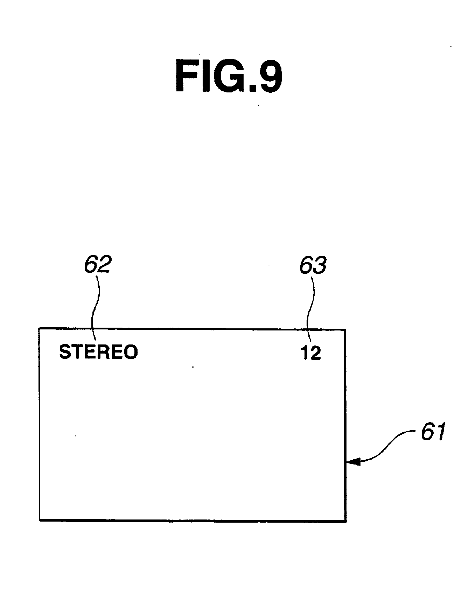

Next, Fig. 9 is a diagram illustrating a state of the television tuner unit 1 displayed on the screen of the head mounted video display.

As described above, when the selection of a channel has been completed, a sound state 62 is displayed, for example, at an upper left corner on a screen 61 of the head mounted video display 3, indicating a stereo sound state in the illustrated example.

A channel number 63 is also displayed, for example, at an upper left corner on the screen 61, indicating that Channel 12 has been selected in the illustrated example.

It should be noted that such conditions can also be displayed by depressing the display button 38.

According to the embodiment as described above, the television tuner unit is fitted to the battery mounting section of the control unit, so that the system can be extended without modifying the configuration of the control unit.

Further, since the television tuner unit itself is provided with the battery mounting section, it can be readily carried and used.

Then, when the rod antenna is carried on the antenna receptor, it substantially covers the buttons, so that erroneous operations thereon can be obviated when not in use.

Also, since the television tuner unit is formed in an L-shape along the outer surfaces of the control unit, it can be carried in compact during carriage. Further, since the bottom surface of the side surface of the L-shaped housing lies substantially in the same plane as the bottom surface of the control unit, it can be held in a stable state even when it is placed on a desk or the like.

Then, since the television tuner unit is formed in a length which will not prevent operations on the control unit, the head mounted video display can be operated through the control unit without any interference.

In addition, since the television tuner unit is connected to the control unit through the AV connection cable straddling over the battery removal knob which is operated when the television tuner unit is removed from the control unit, operations involved in the removal can be naturally performed in a procedure of first removing the AV connection cable, and then removing the television tuner unit from the control unit. In this way, the television tuner unit will never be removed from the control unit when the AV connection cable is connected, so that the AV connection cable will not damaged due to a load applied thereto.

It should be noted that the present invention is not limited to the foregoing embodiment, and a variety of modifications and applications can be of course made without departing from the spirit of the present invention.

### Industrial Availability

According to the television tuner unit of the present invention, since it can be fitted to the battery mounting section of the control unit through the connection section, it can be fitted without modifying the configuration of the control unit.

Also, by mounting the battery in the battery mounting section, the television tuner unit can be supplied with the power from this battery, and the control unit can also be supplied with the power through the connection section. In this way, it is possible to readily enjoy television video with the head mounted video display.

Further, when the antenna takes on the accommodated position in an unused state, the operating means are substantially covered with the antenna, so that erroneous operations can be obviated when not in use.

Also, even when the television tuner unit is fitted to the control unit, it is possible to maintain a shape convenient for carriage and a good operability for the control unit, as well as to stably place it on a desk or the like.

In addition, since the connection code serving as the television signal output section is connected to the control unit as it straddles over the removal operating section, a removing work is performed after the connection code is disconnected as a matter of course, thereby making it possible to obviate a load applied to the connection code resulting from an attempt of removing the television tuner unit from the control unit with the connection code remaining connected.

## Claims

1. A television tuner unit fitted to and for use with a control unit for controlling a head mounted video display and having a battery mounting section for mounting a battery therein, **characterized by** comprising:
an antenna for receiving television radio waves and converting said television radio waves to an electric signal;
a tuner section for extracting a signal of a desired channel from the electric signal converted by said antenna;
a connection section mounted in said battery mounting section of said control unit for supplying power to said control unit; and
a television signal output section for sending a television signal selected by said tuner section to said control unit.

2. A television tuner unit according to claim 1,
**characterized by** further comprising a battery mounting section for mounting a battery therein.

3. A television tuner unit according to claim 1,
**characterized in that**:
said antenna can take on an accommodated position along a surface of a housing of said television tuner unit and a receiving position rising from said housing; and
said television tuner unit comprises operating means for performing operations associated therewith, on a surface of the housing substantially covered with said antenna when said antenna takes on said accommodated position.

4. A television tuner unit according to claim 1,
**characterized in that**:
said housing of said television tuner unit is formed in a substantially L-shape having a top surface and a side surface to cover two surfaces including a top surface on which said battery mounting section is disposed and one side surface of said control unit shaped in a rectangular solid, and is formed in such a shape that does not prevent operations on an operating section disposed on said control unit.

5. A television tuner unit according to claim 4,
**characterized in that** a bottom surface of said side surface is formed to lie substantially in the same plane as a bottom surface of said housing of said control unit when said television tuner is fitted to said control unit.

6. A television tuner unit according to claim 1,
**characterized in that** said television signal output section comprises a connection code connected to said control unit, such that said connection code straddles over a removal operating section for removing a battery or said television tuner unit mounted in said battery mounting section of said control unit.

7. A television tuner system **characterized by** comprising:
a control unit for controlling a head mounted video display, and including a battery mounting section for mounting a battery therein; and
a television tuner unit including an antenna for receiving television radio waves and converting said television radio waves to an electric signal, a tuner section for extracting a signal of a desired channel from the electric signal converted by said antenna, a connection section mounted in said battery mounting section of said control unit for supplying power to said control unit, and a television signal output section for sending a television signal selected by said tuner section to said control unit.

8. A television tuner system according to claim 7,
**characterized in that** said television tuner unit further comprises a battery mounting section for mounting a battery therein.

9. A television tuner system according to claim 7,
**characterized in that**:
said antenna can take on an accommodated position along a surface of a housing of said television tuner and a receiving position rising from said housing; and
said television tuner unit comprises operating means for performing operations associated therewith, on a surface of the housing substantially covered with said antenna when said antenna takes on said accommodated position.

10. A television tuner system according to claim 7,
**characterized in that**:
said control unit comprises an operating section on a surface of a housing formed substantially in a rectangular solid for controlling said head mounted video display; and
said housing of said television tuner unit is formed in a substantially L-shape having a top surface and a side surface to cover two surfaces including a top surface on which said battery mounting section is disposed and one side surface of said control unit, and is formed in such a shape that does not prevent operations on an operating section disposed on said control unit.

11. A television tuner system according to claim 10,
**characterized in that** a bottom surface of the side surface of said television tuner unit is formed to lie substantially in the same plane as a bottom surface of said housing of said control unit when said television tuner unit is fitted to said control unit.

12. A television tuner system according to claim 7,
**characterized in that**:
said control unit further comprises a removal operating section for removing a battery or said television tuner unit mounted in said battery mounting section of said control unit; and
said television signal output section of said television tuner unit comprises a connection code disposed at a position at which said connection code is connected to said control unit, straddling over said removal operating section.

13. A head mounted video display system **characterized by** comprising:
a head mounted video display mounted on a head for use in observing at least a video image displayed thereon;
a control unit for controlling said head mounted video display, and including a battery mounting section for mounting a battery therein; and
a television tuner unit including an antenna for receiving television radio waves and converting said television radio waves to an electric signal, a tuner section for extracting a signal of a desired channel from the electric signal converted by said antenna, a battery mounting section for mounting a battery therein, a connection section mounted in said battery mounting section of said control unit for supplying power to said control unit, and a television signal output section for sending a television signal selected by said tuner section to said control unit.
